(19) Europäisches Patentamt / European Patent Office / Office européen des brevets

(11) **EP 3 767 267 B1**

(12) **EUROPEAN PATENT SPECIFICATION**

(45) Date of publication and mention
of the grant of the patent:
**04.01.2023 Bulletin 2023/01**

(21) Application number: **20152352.9**

(22) Date of filing: **17.01.2020**

(51) International Patent Classification (IPC):
**G01M 3/02** *(2006.01)* **G01M 3/16** *(2006.01)*

(52) Cooperative Patent Classification (CPC):
**G01M 3/16; G01M 3/025**

(54) **OIL LEAKAGE SENSOR FOR MOTORS**

ÖLLECKAGESENSOR FÜR MOTOREN

CAPTEUR DE FUITE D'HUILE POUR MOTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2019 EP 19187461**

(43) Date of publication of application:
**20.01.2021 Bulletin 2021/03**

(73) Proprietor: **ABB Schweiz AG**
**5400 Baden (CH)**

(72) Inventors:
• **Ryba, Piotr**
**36-206 Humniska (PL)**
• **Kikowski, Marek**
**47-400 Raciborz (PL)**

(74) Representative: **AOMB Polska Sp. z.o.o.**
**ul. Rondo Ignacego Daszynskiego 1**
**00-843 Warsaw (PL)**

(56) References cited:
EP-A1- 0 337 630    EP-A1- 3 222 982
WO-A1-2018/131560    US-A- 4 806 847

## Description

### Technical field

This invention relates to an oil leakage sensor for motors, especially for robot servomotors.

### Background

Oil is the one of the most common substance used in industry to minimize friction and wear of mechanical components. Many mechanical systems like a gearbox, servomotors, engines, etc. use oil to increase lifetime of the lubricated components. Variety portfolio of oils types and wide range of business using oil lubricated machines, generate a lot of issues directly related to unpredicted leakage and oil loss. Critical failure strictly connected with oil limitation, can generate costly stop of assembly line or dangerous situation for worker by creating a slippery oil spills. It can be also dangerous for consumer by polluting manufactured food product on automatic manufacturing lines. Oil leakage monitoring system is one of the solution which allows to avoid dangerous situation and allows to limit unpredicted, costly stop of assembly lines. Currently, there are solutions on the market that can detect oil leakage but only for high volume of spilling oil. Present device is mostly dedicated to detection oil presence on the floor in the factories focus on fossil fuel refining or next to the petrol tanks. There is no solution on the market which allows to detect such small volume of oil as a single drop, but even single drop of oil can be a marker of future larger leakage or sealing degradation. Robotics system is one of the business where reliability is the most important factor. Fatal failure or stopping production can cause high financial losses for customers. In robotics system, one of the main problem is an oil leakage from the motors, where degraded seals are not able to provide tightness of the structure over a long period of time. Leakage of oil and at the same time reduction of lubricant below minimum, can cause critical failure of entire system or can limit efficiency or breaking performance. Additionally, there are several industries for example food and beverages or pharmacy where lubricant or foreign substances leaking from the machines, contaminate manufacturing product. The most common situation is a large number of robots, where there is no possibility to supervise each motor or to check each one regularly. Periodic verification of many motors significantly increases maintenance cost and not guarantee detection of each leakage especially in systems where drainage hole is not accessible. Critical failure of single motor can stop entire manufacturing/assembly line without any warning. That's why monitoring of oil leakage and creation of the sensor, which will inform service about loss of oil, can significantly increase reliability of product and at the same time create product which is more competitive and attractive for customer. State of the art sensors are known from WO 2018/131560 A1, EP 3 222 982 A1, EP 0 337 630 A1 and US 4 806 847 A.

### Summary

The proposed solution is based on a concept of a device mounted directly at the drainage hole on the robot servomotors. In each motor there is a drainage hole for a leaking oil. This allows to create a device which is screw mounted into the drain hole. Each sensor contains sensing part and electronic circuit which allows to measure the presence of oil. The principle of sensor operation is based on a detection of change of capacitance of the sensor due to change of permittivity of material acting as a plate separating dielectric. Two electrodes create a capacitor with nominally air-filled chamber, which in case of the leakage, is filled with oil.

The capacitance depends on the relative permittivity of dielectric substance which fill the chamber between two electrodes. Simplified Equation for flat capacitor is show below:

$$C = \frac{\varepsilon_0 \varepsilon_r A}{d}$$

where

    $C$ = Capacitance
    $\varepsilon_0$= permittivity of vacuum
    $\varepsilon_r$= relative electric permittivity of dielectric separator
    $A$ = area of electrodes
    $d$ = distance between electrodes

Relative permittivity of dry air is close to one ($\varepsilon r \approx$ 1.0). Relative permittivity of oil depends of oil type, but in the worst case it can be safely assumed to be more than two ($\varepsilon_r$ > 2.0). Therefore, during leakage, the capacitance should double, providing that, the whole volume of dielectric chamber is filled by the oil.

The present invention relates to an oil leakage sensor (1) for motors (2), especially for robot servomotors, as defined in the appended claim 1.

Preferably, the sensor further comprises means for communicating results of said capacitance measurements.

The means for communicating results of said capacitance measurements may be selected from a group comprising:

    LED diode indication,
    logic digital output enabling signaling of leakage by means of an electrical signal wired, wireless or optical communication system enabling communication with another device and sending information about the state of the sensor.

Preferably, the sensor comprises a pin part for inserting it into the drainage hole of the motor (3), which preferably has a center hole that is suitable for serving as a flow channel for the leaking oil (6).

The outer surface of the pin part may be threaded.

In one embodiment, the sensor is a screw shape device, mountable directly into the drainage hole of motor (3).

In one embodiment, at least part of the sensor (1) has a layered structure of the stacked PCBs. Preferably, the sensor comprises at least one sensor drainage hole (8). The sensor may comprise a layer of a sorbent (9) below, above or between the electrodes (5), wherein the sorbent (9) is a substance which is able to absorb the oil but is not absorbing the water.

The object of the present invention is also a method of oil leakage monitoring as defined in appended claim 11.

The proposed solution allows to detect very small volume of oil leakage at early stage. Advantages of proposed solution are:

- leakage detection level better than 0,25ml of oils
- fully shielded construction
- tiny dimension
- resistance to humidity, flooding and washing
- low cost solution
- robust sensing technology
- resistance for high noisy environment conditions

That kind of sensors allow to increase reliability of robotic system and at the same time allows to provide prognostic diagnostic to avoid fatal failure and costly production stop.

Detailed description of embodiments

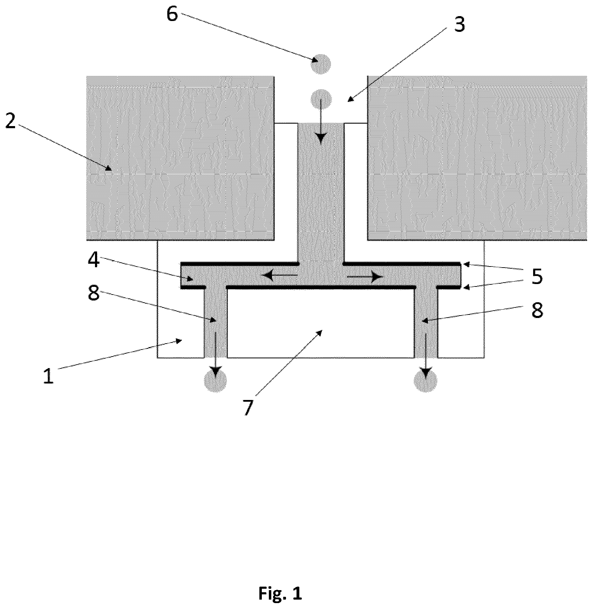

Fig. 1 shows the sensor (1) with a pin part inserted into a drainage hole of a motor (3). The pin part has a center hole that serves as a flow channel. The oil (6) leaking from the motor (2) goes through the center hole in the pin part and further penetrates the chamber (4) between the electrodes (5) of a capacitor and may leave the sensor through the drainage holes of the sensor (8). An electronic circuit (7) located in an electronic chamber situated below the electrodes, measures change of capacitance of the capacitor as it changes when the oil fills the chamber (4) between the electrodes (5). The result of said measurements may be communicated from the sensor to the users by means for communicating results of said capacitance measurements (not shown).

**Humidity and water influence to measurement**

The relative permittivity of oil varies in in the range of 2.0-8.0 depending on type and other factors like wear-out, temperature. On the other hand, electric permittivity of water is around 80, which indicates, that much lower volume of water may create a change in capacitance comparable to that of oil. To prevent false alarms due to high humidity or water contamination additional countermeasures might be applied.

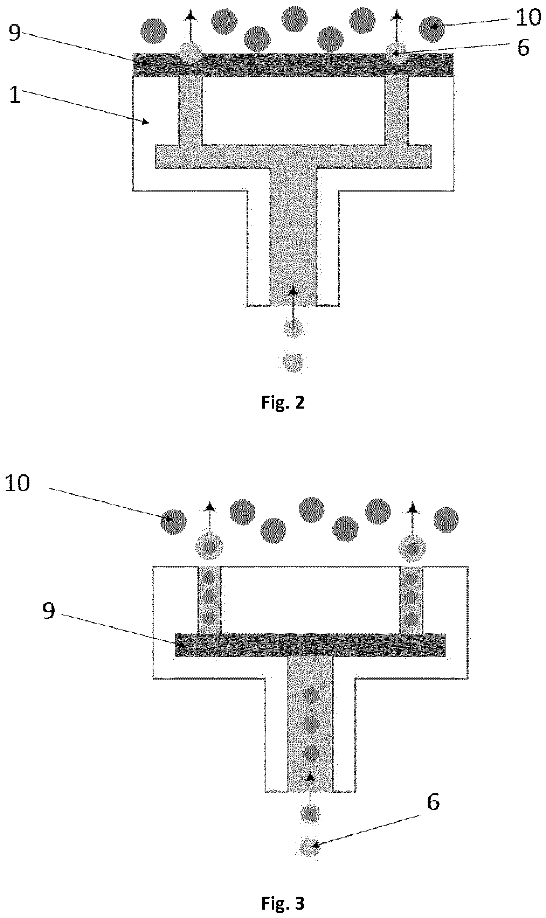

One of the solutions involves covering the sensor cup with a specialized, hydrophobic sorbent (9) - substance which is able to absorb the oil (6) but is not absorbing the water (10), for example nonwoven polypropylene sorbent. That concept is shown at Fig. 2.

Sorbent (9) can also be used to fill the dielectric chamber (4) in order to minimize the influence of the water and the humidity. That concept is shown at Fig. 3.

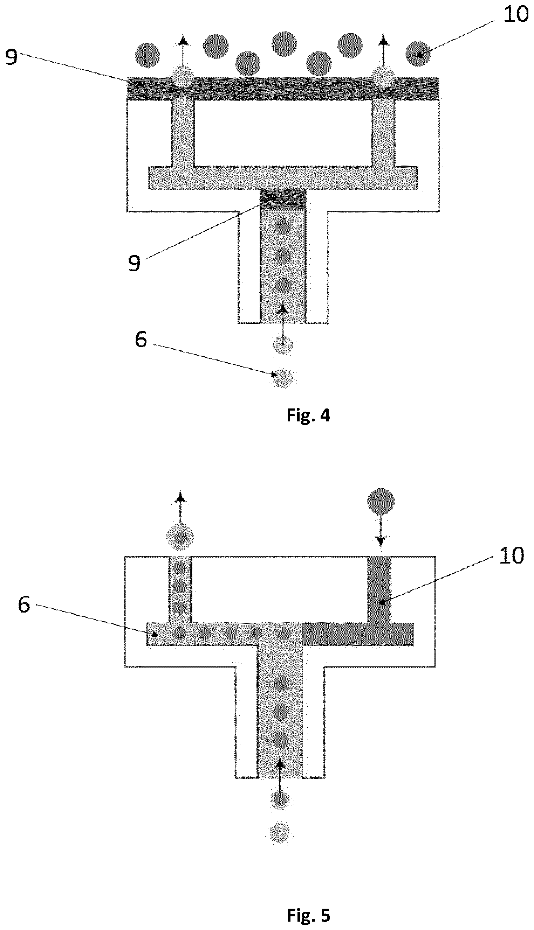

In case the motor (2) compartment is the source of humidity (10), the oil inlet may also be protected with sorbent (9) pad. That concept is shown at Figure 4.

Applying a layer of a sorbent at the top, bottom or between electrodes allows to significantly limit amount of water or humidity (10) inside the measurement chamber (4) and at the same time increase stability and reliability of leakage detection.

**Humidity compensation**

According to the claimed invention and in order to compensate the humidity (10) influence on the measured value, the sensor is divided into two separate chambers - measuring and reference one. Measuring chamber can be penetrated by the oil (6) and humidity (10). Reference chamber can only be penetrated by humidity (10). In this case the detection is based on the ratio of capacitances of the measuring and reference chamber. Proposed concept is show at Figure 5.

**Screw shape device implementation**

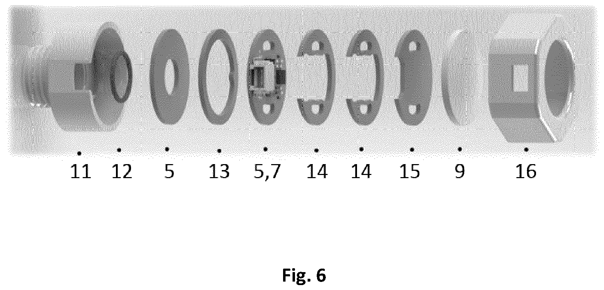

In a preferred embodiment the sensor is implemented as a screw shape device, mounted directly into drain hole. Entire design has a layered structure, which allows to create entire sensor as the stacked PCBs with build in electrodes and entire electronic. Device visualization is shown at Figure 6.

The device comprises:

- screw part (11)
- o-ring seal (12)
- first capacitor electrode (5)
- sensor separator (13)
- second capacitor electrode (5) with embedded system comprising an electronic circuit (7)
- separators (14)
- shielding cap (15)
- sorbent(9)
- screw head (16)

**Additional use**

Proposed solution allows to measure not only oil leakage but on board sensor provide information about temperature. Base at temperature measurements and analysis of noise generated by external motor, located next to the sensor, several additional features can be realized:

- over temperature protection
- online temperature monitoring
- status or motor detection - stop/running
- condition monitoring based at generated noise analysis

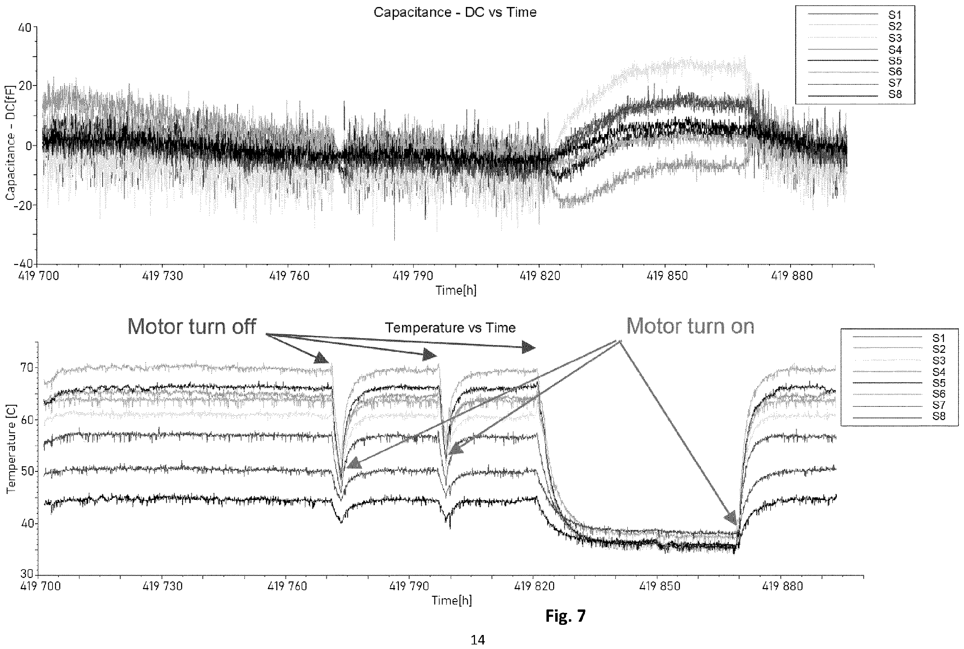

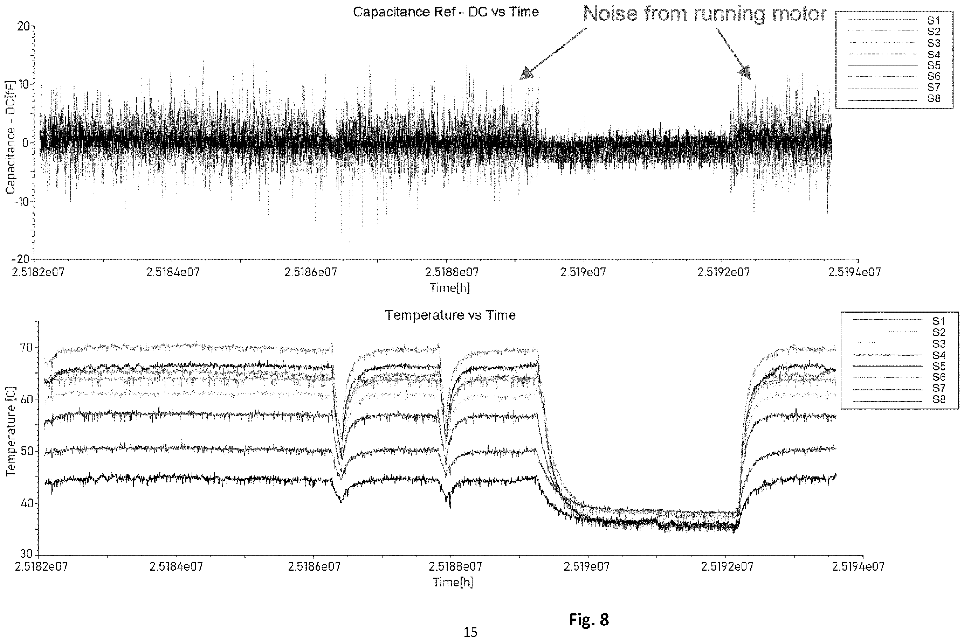

Measurements for 8 sensors shows the described featured on charts at fig. 7 and fig. 8, wherein fig. 7 shows capacitance and temperature measurement results vs time and fig. 8 shows reference capacitance and temperature measurement results vs time.

Based on temperature measurements there is possibility of detection of motor status - running or not running and possibility of implementation a overtemperature protection. The significant temperature rise is observe during run of the motor and much lower temperature during stop which is show at the fig. 7 bottom chart.

What's more, the noise generated by the motor influence the capacitance measurement which is shown at the charts on fig. 7 and fig. 8. Noise increase is observe during the motor running. Analysis of the noise: amplitude, frequency analysis and noise changes during long period of time can be used for motor condition monitoring.

## Claims

1. An oil leakage sensor (1) for motors (2), especially for robot servomotors comprising:

   sensing part in a form of a capacitor mountable at a motor drainage hole (3) in such a way that in case of oil leakage a chamber (4) between electrodes (5) of the capacitor Is penetrated by the leaking oil (7), and
   an electronic circuit (8) for measuring capacitance of said capacitor, **characterized in that** the chamber (4) is divided into a measuring chamber and a reference chamber, being separate chambers, whereby leaking oil and humidity may penetrate the measuring chamber, while the reference chamber may be penetrated by the humidity only.

2. The sensor according to claim 1, **characterized in that** it comprises means for communicating results of said capacitance measurements.

3. The sensor according to claim 2, **characterized in that** the means for communicating results of said capacitance measurements are selected from a group comprising:

   LED diode indicator,

logic digital output enabling signaling of leakage by means of an electrical signal wired, wireless or optical communication system enabling communication with another device and sending information about the state of the sensor.

4. The sensor according to claim 1 or 2 or 3, **characterized in that** it comprises a pin part for inserting it into the drainage hole of the motor (3).

5. The sensor according to claim 4, **characterized in that** the pin part has a center hole that is suitable for serving as a flow channel for the leaking oil (6).

6. The sensor according to claim 4 or 5, **characterized in that** the outer surface of the pin part is threaded.

7. The sensor according to any of the preceding claims, **characterized in that** the sensor is a screw shape device, mountable directly into the drainage hole of motor (3).

8. The sensor according to any of the preceding claims, **characterized in that** at least part of the sensor (1) has a layered structure of the stacked PCBs.

9. The sensor according to any of the preceding claims, **characterized in that** it comprises at least one sensor drainage hole (8).

10. The sensor according to any of the preceding claims, **characterized in that** it comprises a layer of a sorbent (9) below, above or between the electrodes (5), wherein the sorbent (9) is a substance which is able to absorb the oil but is not absorbing the water.

11. A method of oil leakage monitoring, **characterized in that** it comprises a step of directing an oil leaking from a motor to a sensor according to any of claims from 1 to 10 and measuring the capacitance using said sensor.

## Patentansprüche

1. Ein Ölleckagesensor (1) für Motoren (2), insbesondere für Roboterservomotoren, umfassend: einen Sensorteil in Form eines Kondensators, der an einer Motorabflussöffnung (3) so angebracht werden kann, dass im Falle eines Öllecks die Kammer (4) zwischen den Elektroden (5) des Kondensators von dem austretenden Öl (7) durchdrungen wird, und eine elektronische Schaltung (8) zum Messen der Kapazität des genannten Kondensators, **dadurch gekennzeichnet, daß** die Kammer (4) in zwei getrennte Kammern - Meßkammer und Referenzkammer - unterteilt ist, wobei auslaufendes Öl und Feuchtigkeit in die Meßkammer eindringen können, während die Referenzkammer nur von der Feuchtigkeit durchdrungen werden kann.

2. Der Sensor nach Anspruch 1, **dadurch gekennzeichnet, dass** er Mittel zur Übermittlung der Ergebnisse der genannten Kapazitätsmessungen umfasst.

3. Der Sensor nach Anspruch 2, **dadurch gekennzeichnet, dass** die Mittel zur Übermittlung der Ergebnisse der genannten Kapazitätsmessungen aus einer Gruppe ausgewählt sind, die Folgendes umfasst:

eine LED-Diodenanzeige,
einen logischen Digitalausgang, der eine Signalisierung der Leckage durch ein elektrisches Signal ermöglicht,
ein drahtgebundenes, drahtloses oder optisches Kommunikationssystem, das die Kommunikation mit einem anderen Gerät ermöglicht und Informationen über den Zustand des Sensors sendet.

4. Der Sensor nach Anspruch 1 oder 2 oder 3, **dadurch gekennzeichnet, dass** er einen Stiftteil zum Einstecken in das Abflussloch des Motors (3) umfasst.

5. Der Sensor nach Anspruch 4, **dadurch gekennzeichnet, dass** der Stiftteil ein Mittelloch aufweist, das als Strömungskanal für das austretende Öl (6) dienen kann.

6. Der Sensor nach Anspruch 4 oder 5, **dadurch gekennzeichnet, dass** die Außenfläche des Stiftteils mit einem Gewinde versehen ist.

7. Der Sensor nach einem der vorhergehenden Ansprüche, **dadurch gekennzeichnet, dass** der Sensor eine schraubenförmige Vorrichtung ist, die direkt in das Abflussloch des Motors (3) eingebaut werden kann.

8. Der Sensor nach einem der vorhergehenden Ansprüche, **dadurch gekennzeichnet, dass** zumindest ein Teil des Sensors (1) eine Schichtstruktur der gestapelten Leiterplatten aufweist.

9. Der Sensor nach einem der vorhergehenden Ansprüche 9, **dadurch gekennzeichnet, dass** er mindestens ein Sensorabflussloch (8) aufweist.

10. Der Sensor nach einem der vorhergehenden Ansprüche, **dadurch gekennzeichnet, dass** er eine Schicht aus einem Sorptionsmittel (9) unter, über oder zwischen den Elektroden (5) umfasst, wobei das Sorptionsmittel (9) eine Substanz ist, die in der Lage ist, das Öl zu absorbieren, aber kein Wasser absorbiert.

11. Das Verfahren zur Überwachung von Ölleckagen, **dadurch gekennzeichnet, dass** es den Schritt umfasst, ein aus einem Motor austretendes Öl in eine Kammer eines Kondensators zu leiten und die Kapazität des genannten Kondensators zu messen, wobei ein Sensor nach einem der Ansprüche 1 bis 10 verwendet wird.

**Revendications**

1. Un détecteur de fuite d'huile (1) pour moteurs (2), en particulier pour servomoteurs de robot, comprenant : une partie de détection sous la forme d'un condensateur pouvant être monté au niveau d'un trou de drainage de moteur (3) de telle manière qu'en cas de fuite d'huile, la chambre (4) entre les électrodes (5) du condensateur est pénétrée par l'huile (7) qui fuit, et un circuit électronique (8) pour mesurer la capacité dudit condensateur, **caractérisé en ce que** la chambre (4) est divisée en deux chambres séparées - chambre de mesure et chambre de référence, tandis que l'huile qui fuit et l'humidité peuvent pénétrer dans la chambre de mesure, tandis que la chambre de référence ne peut être pénétrée que par l'humidité.

2. Le détecteur selon la revendication 1, **caractérisé en ce qu'**il comprend des moyens de communication des résultats desdites mesures de capacité.

3. Le détecteur selon la revendication 2, **caractérisé en ce que** les moyens de communication des résultats desdites mesures de capacité sont choisis au sein d'un groupe comprenant :

indicateur à diode LED,
sortie numérique logique permettant de signaler une fuite au moyen d'un signal électrique,
système de communication par fil, sans fil ou optique permettant de communiquer avec un autre dispositif et d'envoyer des informations sur l'état du détecteur.

4. Le détecteur selon la revendication 1 ou 2, ou 3, **caractérisé en ce qu'**il comprend une partie broche pour l'insérer dans le trou de drainage de moteur (3).

5. Le détecteur selon la revendication 4, **caractérisé en ce que** la partie broche a un trou central qui est approprié pour servir de canal d'écoulement pour l'huile (6) qui fuit.

6. Le détecteur selon la revendication 4 ou 5, **caractérisé en ce que** la surface extérieure de la partie broche est filetée.

**7.** Le détecteur selon l'une quelconque des revendications précédentes, **caractérisé en ce que** le détecteur est un dispositif en forme de vis, pouvant être monté directement dans le trou de drainage de moteur (3).

**8.** Le détecteur selon l'une quelconque des revendications précédentes, **caractérisé en ce qu'**au moins une partie du détecteur (1) a une structure en couches des PCB empilés.

**9.** Le détecteur selon l'une quelconque des revendications précédentes 9, **caractérisé en ce qu'**il comprend au moins un trou de drainage de détecteur (8).

**10.** Le détecteur selon l'une quelconque des revendications précédentes, **caractérisé en ce qu'**il comprend une couche d'un sorbant (9) au-dessous, au-dessus ou entre les électrodes (5), dans lequel le sorbant (9) est une substance qui est capable d'absorber l'huile mais n'absorbe pas d'eau.

**11.** Une méthode de surveillance des fuites d'huile, **caractérisée en ce qu'**elle comprend l'étape consistant à orienter une fuite d'huile provenant d'un moteur vers une chambre d'un condensateur et à mesurer la capacité dudit condensateur, dans laquelle un détecteur selon l'une quelconque des revendications 1 à 10 est utilisé.

**Fig. 1**

**Fig. 2**

**Fig. 3**

**Fig. 4**

**Fig. 5**

11  12  5  13  5,7  14  14  15  9  16

**Fig. 6**

Fig. 7

Fig. 8

**EP 3 767 267 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018131560 A1
- EP 3222982 A1
- EP 0337630 A1
- US 4806847 A